# EUROPÄISCHE PATENTSCHRIFT

(11) **EP 2 954 272 B1**
(45) Veröffentlichungstag und Bekanntmachung des Hinweises auf die Patenterteilung: **02.03.2022**
(21) Anmeldenummer: 14701471.6
(22) Anmeldetag: 21.01.2014
(51) Int. Cl.: F25D 23/06

(54) **VAKUUMDÄMMKÖRPER**
VACUUM INSULATION BODY
ÉLÉMENT D'ISOLATION SOUS VIDE

(30) Priorität: 07.02.2013 DE 102013005585
(43) Veröffentlichungstag der Anmeldung: 16.12.2015
(73) Patentinhaber: Liebherr-Hausgeräte Lienz GmbH, 9900 Lienz (AT); Liebherr-Hausgeräte Ochsenhausen GmbH, 88416 Ochsenhausen (DE)
(72) Erfinder: FREITAG, Michael, 97082 Würzburg (DE); KERSTNER, Martin, 97072 Würzburg (DE); HIEMEYER, Jochen, 97753 Karlstadt (DE)
(74) Vertreter: Herrmann, Uwe
(86) Internationale Anmeldenummer: PCT/EP2014/000153
(87) Internationale Veröffentlichungsnummer: WO 2014/121893

(56) Entgegenhaltungen:
- EP-A1- 2 472 164
- JP-A- H08 312 880
- US-A1- 2004 058 119
- US-A1- 2009 186 176

## Beschreibung

Die vorliegende Erfindung betrifft einen Vakuumdämmkörper umfassend wenigstens einen Hüllkörper und wenigstens eine diffusionsdichte Umhüllung, die wenigstens bereichsweise an den Hüllkörper angrenzt.

Aus dem Stand der Technik ist das Prinzip der Vakuumwärmedämmung seit langem bekannt. Die Dokumente US 2004/058119 A1 und US 2009/186176 A1 zum Beispiel offenbaren Vakuumdämmkörper.

Um ein wärmegedämmtes Behältnis, wie beispielsweise ein Kühl- bzw. Gefriergerät herzustellen, das nach dem Prinzip der Vakuumwärmedämmung ausgeführt sein soll, ist es erforderlich, eine vakuumdichte Hülle zu erzeugen. Da üblicherweise eine selbsttragende Hülle schwer realisierbar ist, es sei denn die Behältnisse sind rotationssymmetrisch, wird üblicherweise ein Füllmaterial verwendet, das dem Vakuumdämmkörper die entsprechende Formstabilität gibt und verhindert, dass die Wandungen des Vakuumdämmkörpers nach der Vakuumerzeugung unmittelbar aneinanderliegen. Bei diesem Füllmaterial kann es sich beispielsweise um eine Schüttung handeln.

Wird ein poröses Füllmaterial verwendet, wird die Anforderung an das Vakuum reduziert, denn die Porengröße des Füllmaterials hat einen Einfluss auf die verbleibende Gaswärmeleitung. Je kleiner die Poren des Füllmaterials, desto geringer sind die Anforderungen an das angelegte Vakuum, um den unerwünschten Effekt der Gaswärmeleitung zu unterdrücken.

Um für solche vakuumgedämmten Behältnisse eine hinreichende Lebensdauer bereitzustellen, muss die Hülle, die den evakuierten Bereich umgibt in hohem Maße vakuumdicht sein. In Abhängigkeit von der Art des Füllmaterials ergeben sich unterschiedliche Ansprüche an die exakt maximal tolerierbare Leckrate, jedoch ist in allen Fällen sicherzustellen, dass eine hohe Vakuumdichtheit vorliegt.

Aus dem Stand der Technik ist es beispielsweise des Weiteren bekannt, eine Hochbarrierefolie einzusetzen, um eine Diffusionsdichte und damit als Begrenzung eines evakuierten Bereichs geeignete Hülle zu erzeugen.

Bei der Verwendung derartiger Umhüllungen besteht jedoch das Problem, wie diese möglichst einfach und zuverlässig relativ zu der entsprechenden angrenzenden Wandung angeordnet werden können, um letztlich einen Vakuumdämmkörper herzustellen.

Kommt es beispielsweise beim Anlegen der Umhüllung an den entsprechenden Hüllkörper bzw. an eine Wandung zu Beschädigungen der Umhüllung, ist die Lebensdauer des Vakuumdämmkörpers entsprechend begrenzt bzw. dessen Brauchbarkeit von vornherein nicht gegeben.

Der vorliegenden Erfindung liegt daher die Aufgabe zugrunde, einen Vakuumdämmkörper der eingangs genannten Art dahingehend weiterzubilden, dass dieser eine hohe Lebensdauer aufweist.

Diese Aufgabe wird durch einen Vakuumdämmkörper mit den Merkmalen des Anspruchs 1 gelöst. Danach ist vorgesehen, dass die Umhüllung als vorgefertigter Beutel oder Teilbeutel vorliegt, der in seiner Geometrie vollständig oder weitgehend der Form des Hüllkörpers angepasst ist. Erfindungsgemäß ist somit vorgesehen, dass in einem ersten Verfahrensschritt der genannte Beutel oder Teilbeutel gefertigt wird, und zwar derart, dass eine Geometrie vollständig oder weitgehend der Form des Hüllkörpers angepasst ist.

Denkbar ist es beispielsweise, dass es sich bei dem formgebenden Hüllkörper um einen Innenbehälter eines Kühl- und/oder Gefriergerätes handelt. In diesem Fall wird die Umhüllung derart hergestellt, dass sie in ihrer Geometrie weitgehend der Form des Innenbehälters angepasst ist bzw. entspricht und vorzugsweise so ausgeführt ist, dass sie über diesen gestülpt werden kann.

So ist es beispielsweise denkbar, dass der Innenbehälter oder das Außengehäuse nicht als einfaches kastenförmiges Gebilde ausgeführt ist, sondern gegebenenfalls eine oder mehrere Vorsprünge oder Einbuchtungen, wie etwa die Kompressornische aufweist. In diesem Fall wird die Umhüllung entsprechend ausgeführt, d. h. ebenfalls mit einem derartigen stufenförmigen Absatz, so dass eine möglichst gute Nachbildung der Kontur des Hüllkörpers erreicht wird. Während somit in einem ersten Verfahrensschritt der Beutel bzw. Teilbeutel vorgefertigt wird, beispielsweise aus einem Flachmaterial bzw. aus Folie, die dann an Kanten zusammengeschweißt oder verklebt wird, folgt in einem zweiten Verfahrensschritt das Positionieren dieser Umhüllung relativ zu dem Hüllkörper, wie beispielsweise durch Überstülpen oder Einsetzen, je nach dem ob die Umhüllung auf der Außen- oder Innenseite des fraglichen Hüllkörpers angebracht werden soll.

Durch die erfindungsgemäße Ausgestaltung des Vakuumdämmkörpers werden Spannungen in der Umhüllung weitgehend oder vollständig vermieden, so dass eine Beschädigungsgefahr für die Umhüllung entsprechend reduziert ist und der Vakuumdämmkörper eine entsprechend große Lebensdauer aufweist.

Die Umhüllung ist als Beutel bzw. als Teilbeutel ausgeführt, worunter zu verstehen ist, dass die Umhüllung ein nur an einer Seite offenes Gebilde oder auch an mehr als einer Seite offenes Gebilde darstellt.

In einer bevorzugten Ausgestaltung der Erfindung ist vorgesehen, dass die Oberfläche der Umhüllung größer ist als die Oberfläche des Hüllkörpers oder des Hüllkörperabschnittes, relativ zu dem die Umhüllung positioniert wird bzw. dass das Volumen der Umhüllung vor dem Anbringen am Hüllkörper größer ist als das Volumen des Hüllkörpers, so dass die Umhüllung über den Hüllkörper gestülpt bzw. gezogen werden kann.

Die Abmessungen der Umhüllung sind in diesem Ausführungsbeispiel somit wenigstens geringfügig größer als die entsprechenden Abmessungen des Hüllkörpers, so dass ein Überstülpen möglich ist.

Eine solche Ausgestaltung vereinfacht nicht nur das Anbringen der Umhüllung am Hüllkörper, sondern berücksichtigt auch, dass es am Hüllkörper Unregelmäßigkeiten beispielsweise in Form des Verdampfers eines Kühl- bzw. Gefriergerätes geben kann, die ebenfalls von der Umhüllung miteingefasst werden müssen. Wird die Umhüllung entsprechend größer ausgeführt als der Hüllkörper, ist es kein Problem, auch diese Komponenten bzw. Unregelmäßigkeiten des Hüllkörpers mit von der Umhüllung einzufassen.

Vorzugsweise besteht somit die Umhüllung aus einem übergroßen Foliensack aus vakuumdichter Folie.

Erfindungsgemäß ist vorgesehen, dass der Hüllkörper eine oder mehrere vorspringende oder zurückversetzte Konturen aufweist, so dass die Umhüllung diese Konturen weitgehend oder vollständig nachbildet.

Somit liegt die Umhüllung weitgehend konturengenau an dem Hüllkörper an. Ein solches Anliegen kann beispielsweise dadurch erreicht werden, dass zwischen der Umhüllung und dem Hüllkörper ein Vakuum bzw. Unterdruck angelegt wird. Befindet sich beispielsweise auf der Außenseite des Hüllkörpers ein Verdampfer oder sonstige Leitungen oder andere Komponenten, bildet die Umhüllung diese Komponenten weitgehend oder vollständig ab, d. h. liegt weitgehend oder vollständig an diesen an.

Weiterhin kann vorgesehen, dass die Umhüllung teilweise oder vollständig als Hochbarrierefolie ausgeführt ist.

Die Umhüllung ist mit dem Hüllkörper in weiten Teilen verklebt.

Sie kann den Hüllkörper auf dessen Außenseite oder auf dessen Innenseite umgeben bzw. in diesen eingesetzt sein.

Sie kann in ihren Hauptflächen aus einer Aluminiumverbundfolie bestehen und in den Übergangsbereichen der Hauptflächen eine metallisierte Hochbarrierefolie aufweisen, die vakuumdicht mit der Aluminiumverbundfolie der Hauptflächen verbunden ist.

Somit ist es denkbar, beispielsweise im Falle eines kastenförmig ausgeführten Innenbehälters die flächigen Abschnitte aus der genannten Aluminiumverbundfolie herzustellen und die Übergangsabschnitte in den Kantenbereichen aus einer metallisierten Hochbarrierefolie, die mit der Aluminiumverbundfolie vakuumdicht verbunden ist.

Die Herstellung der Umhüllung kann auf einer Form durchgeführt werden, die in ihrer Gestalt der des Hüllkörpers ähnelt oder entspricht.

Diese Verbindung der beiden Folien kann beispielsweise durch Kleben oder Schweißen erfolgen.

Die vorliegende Erfindung betrifft des Weiteren ein Kühl- und/oder Gefriergerät mit wenigstens einem gekühlten Innenraum und mit wenigstens einer den gekühlten Innenraum wenigstens bereichsweise umgebenden Wandung, wobei die Wandung teilweise oder vollständig durch wenigstens einen erfindungsgemäßen Vakuumdämmkörper gebildet wird.

Bei dem eingangs genannten Hüllkörper kann es sich beispielsweise um den Innenbehälter des Gerätes handeln, der auf seiner von dem gekühlten Innenraum abgewandten Seite mit der erfindungsgemäßen Umhüllung versehen ist. Grundsätzlich kann es sich bei dem Hüllkörper auch um das Außengehäuse eines Kühl- und/oder Gefriergerätes handeln, dessen von der Außenseite abgewandte Innenseite mit der erfindungsgemäßen Umhüllung versehen sein kann. Die "Umhüllung" kann somit auch als Einsatz ausgeführt sein.

Denkbar ist es weiterhin, dass die Wandung des Kühl- und/oder Gefriergerätes einerseits somit den Innenbehälter und andererseits die Außenwand des Gerätes umfasst, wobei vorzugsweise vorgesehen ist, dass zwischen diesen beiden Wandungen Vakuum herrscht und vorzugsweise keine Ausschäumung zum Zwecke der Wärmeisolation vorhanden ist, wie dies bei bekannten Kühl- und/oder Gefriergeräten der Fall ist.

Denkbar ist es weiterhin, dass in dem evakuierten Bereich zwischen dem Innenbehälter und der Außenwandung eine Schüttung z. B. aus einer Siliciumoxidverbindung und/oder Perlit vorliegt.

Die Umhüllung ist teilweise oder vollständig mit dem entsprechenden Hüllkörper, d. h. beispielsweise mit dem Innenbehälter oder auch mit dem Außenbehälter bzw. den Außenwandungen verklebt.

Denkbar ist es, bestimmte Bereiche der Umhüllung nicht mit dem Hüllkörper zu verkleben oder zu verbinden, um eine gewisse Flexibilität bei der Positionierung der Umhüllung zu ermöglichen.

Die vorliegende Erfindung betrifft des Weiteren ein Verfahren zur Herstellung eines Vakuumdämmkörpers nach einem der Ansprüche 1 bis 4, wobei wenigstens eine diffusionsdichte Umhüllung an wenigstens einem formgebenden Hüllkörper angeordnet wird, wobei die Umhüllung als vorgefertigter Beutel oder Teilbeutel vorliegt, der in seiner Geometrie vollständig oder weitgehend der Form des Hüllkörpers angepasst ist.

Denkbar ist es, als einen Verfahrensschritt vorzusehen, dass die vorgefertigte Umhüllung über den Hüllkörper gestülpt oder in diesen eingesetzt wird und gegebenenfalls teilsweise oder vollflächig mit dem jeweiligen Hüllkörper verbunden wird. Um ein möglichst vollständiges Anliegen der Umhüllung an dem Hüllkörper zu erreichen, kann vorgesehen sein, dass zwischen der Umhüllung und dem Hüllkörper Unterdruck angelegt wird, so dass sich die Umhüllung an die Oberfläche des Hüllkörpers anlegt.

Dieser Verfahrensschritt führt dazu, dass die Umhüllung die Konturen des Hüllkörpers, wie beispielsweise des Innenbehälters teilweise oder vollständig abbildet. Denkbar ist es, dieses Anliegen durch Unterdruck in einem Stadium zu erzeugen, in dem der mit der Umhüllung versehene Innenbehälter in den beispielsweise mit einer diffusionsdichten Folie innen kaschierten Außenbehälter eingesetzt wird. Denkbar ist es, dass nach diesem Einsetzen der Zwischenraum zwischen Innenbehälter und Außenwandung bzw. den jeweiligen Umhüllungen mit einer Schüttung, wie beispielsweise mit einem Perlitpulver, gefüllt wird und dass sodann die diffusionsdichten Folien sowohl des Innenbehälters als auch des Außenkörpers vakuumdicht miteinander verbunden werden, so dass im Anschluss daran im Bereich der Schüttung Vakuum angelegt werden kann.

Die Versiegelung der jeweiligen Umhüllungen bzw. der Umhüllung des Innenbehälters sowie der Folie bzw. Umhüllung des Außenbehälters kann thermisch erfolgen. Denkbar ist es weiterhin, zum Zwecke der gleichmäßigen Verteilung der Schüttung die Anordnung nach dem Befüllen auf den Kopf zu stellen und durch Vibrationen und ein Wechselspiel von Unterdruck und Überdruck bzw. Belüftung das Pulver in Form zu bringen, so dass weder der Innenbehälter noch der Außenbehälter bzw. die Außenwandung Ausbauchungen oder unerwünschte Konturen aufweisen.

Weist das Pulver seine Sollform bzw. Sollverteilung auf, kann die Evakuierung des Bereichs zwischen Innenbehälter und Außenwandung vorgenommen werden, d. h. die Sollform wird durch Anlegen von Unterdruck fixiert.

Weitere Einzelheiten und Vorteile der Erfindung werden anhand eines in der Zeichnung dargestellten Ausführungsbeispiels näher erläutert. Es zeigen:
- Figur 1:: eine Darstellung eines Foliensacks aus Hochbarrierefolie, der über einen Innenbehälter gestülpt ist,
- Figur 2:: die Anordnung gemäß Figur 1 nach dem Ansaugen der Umhüllung an den Innenbehälter,
- Figur 3:: eine Detaildarstellung der Anordnung gemäß Figur 2 und
- Figur 4:: eine perspektivische Darstellung eines mit Verdampfer ausgeführten Innenbehälters.

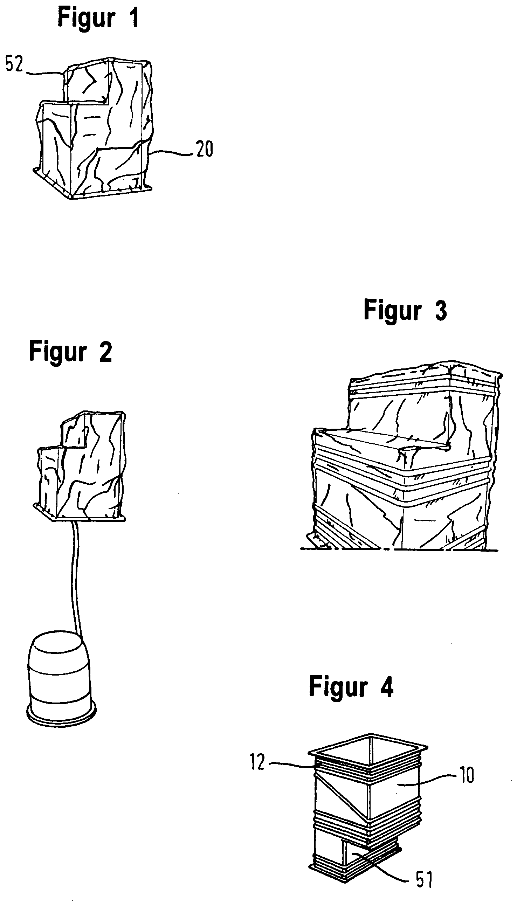

Figur 4 zeigt mit dem Bezugszeichen 10 einen Innenbehälter, der beispielsweise aus Kunststoff oder Metall bestehen kann und der auf seiner Außenseite eine Verdampferwicklung 12 in Form eines oder mehrerer Rohre und in seinem unteren Bereich einen stufenförmigen Einschnitt 51 aufweist.

Um diesen Innenbehälter mit einer Folie bzw. Hochbarrierefolie zu ummanteln, wird aus einem Folienbeutel bzw. aus einer Rollenware, wie z. B. Aluminiumverbundfolie mit angeschweißter metallisierter Folie ein Folienbeutel erstellt, der in seiner Kontur der des in Figur 4 dargestellten Innenbehälters 10 entspricht. Dies bedeutet, dass der vorgefertigte Folienbeutel ebenfalls in dem hier dargestellten Ausführungsbeispiel aus einem kastenförmigen Bereich besteht, der in seinem einen unteren Bereich einen stufenförmigen Einschnitt 52 aufweist. Der Folienbeutel stellt somit ein Abbild des Innenbehälters dar, wobei dessen Innenabmessung über denen der Außenabmessung des Innenbehälters liegen, so dass dieser über den Innenbehälter gestülpt werden kann.

Figur 1 zeigt den Zustand, in dem der Foliensack aus Aluminiumverbundfolie bzw. Hochbarrierefolie 20 über den Innenbehälter 10 gestülpt ist.

Um ein Anliegen des Folienbeutels an der Außenseite des Innenbehälters zu erreichen, wird der Foliensack angesaugt und schmiegt sich somit an die Oberfläche des Innenbehälters an. Dieser Zustand ist in Figur 2 und 3 wiedergegeben.

In diesem durch Unterdruck fixierten Zustand kann der entsprechend überzogene Innenbehälter in einer Außenkontur bzw. in einen Außenbehälter eingesetzt werden. Dieser Außenbehälter weist auf seiner zum Innenbehälter gewandten Seite ebenfalls eine Hochbarrierefolie auf, so dass die Hochbarrierefolie insgesamt einerseits durch die Umhüllung 20 gemäß Figur 2 und andererseits durch die Hochbarrierefolie gebildet wird, die die Innenverkleidung des Außenbehälters bildet. Nach dem Einsetzen und Einfüllen von Schüttgut, wie beispielsweise Perlitpulver werden diese beiden Hüllungen vakuumdicht miteinander verschweißt, so dass der Bereich der Schüttung evakuiert werden kann.

Figur 3 zeigt eine Detaildarstellung des mit der Umhüllung überzogenen Innenbehälters und verdeutlicht, dass beispielsweise die Verdampferkonturen, die in Figur 4 ersichtlich sind, in der Umhüllung nachgebildet sind.

## Patentansprüche

1. Vakuumdämmkörper für ein Kühl- und/oder Gefriergerät, umfassend:
einen Hüllkörper (10), wobei der Hüllkörper ein Innenbehälter eines Kühl- und/ oder Gefriergerätes, oder ein Außengehäuse eines Kühl- und/oder Gefriergerätes ist, und
eine diffusionsdichte Umhüllung (20), die wenigstens bereichsweise an dem Hüllkörper (10) angrenzt, wobei
die Umhüllung (20) zumindest teilweise als vorgefertigter Beutel oder Teilbeutel vorliegt, der in seiner Geometrie vollständig oder weitegehend der Form des Hüllkörpers (10) angepaßt ist,
wobei der Hüllkörper (10) eine oder mehrere vorspringende oder zurückversetzte Konturen aufweist und wobei die Umhüllung (20) diese Konturen weitgehend oder vollständig nachbildet, **dadurch gekennzeichnet, dass** die Umhüllung (20) teilweise oder vollständig mit dem Hüllkörper (10) verklebt ist.

2. Vakuumdämmkörper nach Anspruch 1, **dadurch gekennzeichnet, dass** die Oberfläche der Umhüllung (20) größer ist als die Oberfläche des Hüllkörpers (10) oder des Hüllkörperabschnitts, an dem die Umhüllung (20) anliegt.

3. Vakuumdämmkörper nach einem der vorhergehenden Ansprüche, **dadurch gekennzeichnet, dass** die Umhüllung (20) teilweise oder vollständig als Hochbarrierefolie ausgebildet ist.

4. Vakuumdämmkörper nach einem der vorhergehenden Ansprüche, **dadurch gekennzeichnet, dass** die Umhüllung (20) in deren Hauptflächen aus einer Aluminiumverbundfolie besteht und dass in den Übergangsbereichen der Hauptflächen eine metallisierte Hochbarrierefolie vorliegt, die vakuumdicht mit der Aluminiumverbundfolie verbunden ist.

5. Kühl- und/oder Gefriergerät mit
einem gekühlten Innenraum, und
einer den gekühlten Innenraum wenigstens bereichsweise umgebenden Wandung, wobei
die Wandung einen Innenbehälter (10) und eine Außenwandung des Gerätes umfasst,
**dadurch gekennzeichnet, dass**
die Wandung teilweise oder vollständig durch einen Vakuumdämmkörper gemäß einem der Ansprüche 1 bis 4 gebildet ist,
in einem Bereich zwischen Innenbehälter (10) und Außenwandung eine Schüttung vorliegt,
wobei die Umhüllung (20) des Innenbehälters (20) über den Innenbehälter (10) gestülpt ist,
wobei der Außenbehälter an seiner zum Innenbehälter (10) gewandten Seite ebenfalls eine Umhüllung (20) aufweist
wobei die Umhüllung (20) des Innenbehälters (10) und die Umhüllung (20) des Außenbehälters vakuumdicht miteinander verschweißt sind, und
der Bereich evakuiert ist.

6. Kühl- und/oder Gefriergerät nach Anspruch 5, **dadurch gekennzeichnet, dass** in dem , Bereich zwischen Innenbehälter (10) und Außenwandung keine Ausschäumung zum Zwecke der Wärmeisolation vorhanden ist.

7. Kühl- und/oder Gefriergerät nach Anspruch 5 oder 6, **dadurch gekennzeichnet, dass** die Schüttung aus einer Siliciumoxdiverbindung und/oder Perlit vorgesehen ist.

8. Verfahren zur Herstellung eines Vakuumdämmkörpers nach einem der Ansprüche 1 bis 4, **dadurch gekennzeichnet, dass** wenigstens eine diffusionsdichte Umhüllung (20) an wenigstens einen formgebenden Hüllkörper (10) angelegt wird, wobei die Umhüllung (20) als vorgefertigter Beutel oder Teilbeutel vorliegt, der in seiner Geometrie vollständig oder weitegehend der Form des ' Hüllkörpers (10) angepaßt ist.

9. Verfahren nach Anspruch 8, **dadurch gekennzeichnet, dass** nach dem Anlegen der Umhüllung (20) zwischen der Umhüllung (20) und dem Hüllkörper (10) Unterdruck angelegt wird.

## Claims

1. A vacuum insulation body for a refrigerator and/or a freezer comprising
an envelope body (10), wherein the envelope body is an inner container of a refrigerator and/or freezer or an outer housing of a refrigerator and/or freezer; and
a diffusion-tight envelope (20) which at least regionally adjoins the envelope body (10), wherein
the envelope (20) is at least partly present as a prefabricated bag or partial bag whose geometry is completely or largely adapted to the shape of the envelope body (10), wherein
the envelope body (10) has one or more projecting or set back contours, and wherein
the envelope (20) maps largely or completely maps these contours, **characterized in that** the envelope (20) is partly or completely adhesively bonded to the envelope body (10).

2. A vacuum insulation body according to claim 1, **characterized in that** the surface of the envelope (20) is greater than the surface of the envelope body (10) or of the envelope body portion against which the envelope (20) rests.

3. A vacuum insulation body according to any one of the preceding claims, **characterized in that** the envelope (20) is partly or completely formed as a high-barrier film.

4. A vacuum insulation body according to any one of the preceding claims, **characterized in that** the envelope (20) consists of an aluminum composite film in its main surfaces; and **in that** a metallized high-barrier film is present in the transition regions of the main surfaces which is connected to the aluminum composite film in a vacuum-tight manner.

5. A refrigerator and/or freezer having
a cooled inner space and
a wall at least regionally surrounding the cooled interior space, wherein the wall comprises an inner container (10) and an outer wall of the appliance,
**characterized in that**
the wall is partly or completely formed by a vacuum insulation body according to any one of the claims 1 to 4;
a bulk material is present in a region between the inner container (10) and the outer wall,
with the envelope (20) of the inner container (10) being pulled over the inner container (10);
with the outer container likewise e having an envelope (20) at its side facing the inner container (10);
with the envelope (20) of the inner container (10) and the envelope (20) of the outer container being welded together in a vacuum-tight manner; and the region being evacuated.

6. A refrigerator and/or freezer according to claim 5,
**characterized in that**
no foam insulation is present in the region between the inner container (10) and the outer wall for the purpose of heat insulation.

7. A refrigerator and/or freezer according to claim 5 or 6,
**characterized in that**
the bulk material is provided from a silicon oxide compound and/or pearlite.

8. A method for manufacturing a vacuum insulation body according to any one of the claims 1 to 4, **characterized in that** at least one diffusion-tight envelope (20) is placed on at least one shaping envelope body (10), with the envelope (20) being present as a prefabricated bag or partial bag whose geometry is completely or largely adapted to the shape of the envelope body (10),

9. A method according to claim 8 **characterized in that** after the placement of the envelope (20), a negative pressure is applied between the envelope (20) and the envelope body (10).

## Revendications

1. Élément d'isolation sous vide pour un appareil de réfrigération et/ou de congélation, comprenant :
un corps enveloppant (10), le corps enveloppant étant un réceptacle intérieur d'un appareil de réfrigération et/ou de congélation, ou une carcasse extérieure d'un appareil de réfrigération et/ou de congélation, et
une enveloppe (20) étanche à la diffusion, qui est adjacente, au moins sur certaines zones, au corps enveloppant (10), dans lequel
l'enveloppe (20) se présente au moins en partie sous la forme d'un sac ou sac partiel préfabriqué, dont la géométrie est entièrement ou largement adaptée à la forme du corps enveloppant (10),
dans lequel
le corps enveloppant (10) comporte un ou plusieurs contours en saillie ou en retrait et dans lequel
l'enveloppe (20) reproduit entièrement ou largement ces contours, **caractérisé en ce que** l'enveloppe (20) est en partie ou entièrement collée au corps enveloppant (10).

2. Élément d'isolation sous vide selon la revendication 1, **caractérisé en ce que** la surface de l'enveloppe (20) est supérieure à la surface du corps enveloppant (10) ou de la partie de corps enveloppant contre laquelle est appliquée l'enveloppe (20).

3. Élément d'isolation sous vide selon l'une des revendications précédentes, **caractérisé en ce que** l'enveloppe (20) est réalisée en partie ou entièrement sous la forme d'un film haute barrière.

4. Élément d'isolation sous vide selon l'une des revendications précédentes, **caractérisé en ce que** l'enveloppe (20) est constituée, sur ces surfaces principales, d'un film composite d'aluminium et **en ce qu'**un film haute barrière métallisé, qui est relié au film composite d'aluminium de manière étanche au vide, se trouve dans les zones de transition des surfaces principales.

5. Appareil de réfrigération et/ou de congélation comprenant
un espace intérieur réfrigéré, et
une paroi entourant, au moins sur certaines zones, l'espace intérieur réfrigéré, dans lequel
la paroi comprend un réceptacle intérieur (10) et une paroi extérieure de l'appareil,
**caractérisé en ce que**
la paroi est en partie ou entièrement formée par un élément d'isolation sous vide selon l'une des revendications 1 à 4,
une matière de remplissage se trouve dans une zone entre le réceptacle intérieur (10) et la paroi extérieure,
dans lequel l'enveloppe (20) du réceptacle intérieur (20) est enfilée par dessus le réceptacle intérieur (10),
dans lequel le réceptacle extérieur comporte également une enveloppe (20) sur son côté orienté vers le réceptacle intérieur (10)
dans lequel l'enveloppe (20) du réceptacle intérieur (10) et l'enveloppe (20) du réceptacle extérieur sont soudées ensemble de manière étanche au vide et
l'air est évacué de la zone.

6. Appareil de réfrigération et/ou de congélation selon la revendication 5, **caractérisé en ce qu'**il n'y a aucune garniture de mousse pour l'isolation thermique dans la zone entre le réceptacle intérieur (10) et la paroi extérieure.

7. Appareil de réfrigération et/ou de congélation selon la revendication 5 ou 6, **caractérisé en ce que** la matière de remplissage est prévue en un composé d'oxyde de silicium et/ou en perlite.

8. Procédé de fabrication d'un élément d'isolation sous vide selon l'une des revendications 1 à 4, **caractérisé en ce qu'**au moins une enveloppe (20) étanche à la diffusion est appliquée sur au moins un corps enveloppant (10) lui conférant une forme, l'enveloppe (20) se présentant sous la forme d'un sac ou sac partiel préfabriqué, dont la géométrie est entièrement ou largement adaptée à la forme du corps enveloppant (10).

9. Procédé selon la revendication 8, **caractérisé en ce que**, après l'application de l'enveloppe (20), un vide est appliqué entre l'enveloppe (20) et le corps enveloppant (10).
